# EUROPEAN PATENT SPECIFICATION

(11) **EP 2 745 062 B1**
(45) Date of publication and mention of the grant of the patent: **09.11.2016**
(21) Application number: 12824045.4
(22) Date of filing: 15.08.2012
(51) Int. Cl.: F28F 9/02

(54) **DELIVERY CONTAINER FOR TEMPERATURE SENSITIVE GOODS**
AUSGABEBEHÄLTER FÜR TEMPERATUREMPFINDLICHE WAREN
RÉCIPIENT DE DISTRIBUTION POUR MARCHANDISES SENSIBLES À LA TEMPÉRATURE

(30) Priority: 16.08.2011 ZA 201105980
(43) Date of publication of application: 25.06.2014
(73) Proprietor: Ferguson, Gary Wayne, Western Cape Province (ZA); Searle, John Peter, 8005 Cape Town Western Cape Province (ZA)
(72) Inventor: WYNESS, Keith, Somerset West 7130 Western Cape Province (ZA)
(74) Representative: Taor, Simon Edward William
(86) International application number: PCT/IB2012/054162
(87) International publication number: WO 2013/024448

(56) References cited:
- EP-A2- 0 066 547
- EP-A2- 0 066 547
- WO-A1-00/00776
- DE-A1- 2 804 236
- GB-A- 392 697
- JP-U- S5 574 638
- JP-U- S5 574 638
- US-A- 2 049 779
- US-A- 4 457 142

## Description

### FIELD OF THE INVENTION

This invention relates to a delivery container for temperature sensitive goods which term includes frozen and chilled goods in the context of this specification.

More particularly, the invention relates to a delivery container in which a refrigerant such as dry ice or eutectic plates or the like are employed to impart a cooling effect on the interior of a heat insulated delivery container.

The invention is especially, although not exclusively, concerned with delivery containers having cavities in their walls extending from an upper region to a lower region of the container so that cold gases and vapours can flow down the cavities from an upper region to a lower region in order to effectively insulate and refrigerate the interior of the container. Delivery containers of this general type are more fully described in granted South African patent number 98/2759 entitled "A COLD STORAGE CONTAINER".

A delivery container according to the preamble of claim 1 is known from EP0066547.

### BACKGROUND TO THE INVENTION

There is a substantial requirement for the delivery of chilled and frozen goods to consumer outlets from central distribution centres. Delivery containers such as those described in the patent identified above are typically of a generally upright configuration and are mounted on caster style wheels in order to facilitate movement thereof from one place to another over a suitable floor or other support surface. Typically the delivery containers have a vertical narrower side that forms an access opening that is closed by means of a suitable heat insulated door assembly.

The door assembly does not necessarily have cavities of the type indicated above therein and is upright in the closed condition. Prior art door assemblies include those that have a number of heat insulating panels hingedly interconnected so that they can be folded to a stacked condition on the top of the delivery container in order to open the access opening.

Delivery containers of this general nature, in order to be effective in practice, need to distribute cooling gases generally evenly towards the sides and rear of the delivery container. This is especially important in the instance that upright cavities are provided in the walls. The cooling gases may be either sublimated dry ice (CO₂ gas) or air made cold by one or more eutectic plates or any other refrigerant. The dry ice or eutectic plates in each case are associated with a refrigerant support in the upper region of the container.

Applicant believes that there is a need for a delivery container of the type outlined above having a refrigerant support assembly that enables cooling gases to be effectively distributed towards the sides and rear of the container.

Applicant believes that there is also a need for a delivery container in which the introduction and replacement of dry ice refrigerant is facilitated as well as the introduction and removal of any eutectic plates.

### SUMMARY OF THE INVENTION

In accordance with a first aspect of this invention there is provided a delivery container for temperature sensitive goods, the delivery container having sidewalls, a rear wall, top and bottom walls all of a heat insulated construction, an upright access opening opposite the rear wall, a door assembly for selectively closing the access opening, and a cooling gas distribution arrangement including a refrigerant receiving recess in the top region of the interior thereof and multiple generally upright cavities associated with the sidewalls and rear wall, the delivery container being characterised in that the refrigerant receiving recess is provided in a refrigerant support tray having surfaces inclined downwardly towards an upper region of the sidewalls and rear wall of the delivery container for distributing cooling gases generated by refrigerant located in the refrigerant receiving recess to openings communicating with the multiple upright cavities, in use.

Further features of the first aspect of the invention provide for the refrigerant support tray to be removable from the delivery container; for the support tray to have surfaces inclined downwardly from a surrounding edge of the recess towards an upper region of the sidewalls and rear wall of the delivery container, for the multiple upright cavities to be in the form of upright flutes between twin walls of an extruded plastics sheet such as a polypropylene sheet; for the extruded plastics sheet to be removable from the delivery container; and for at least a part of the bottom of the refrigerant receiving recess to be of a thermally conductive material with the balance of the support tray being of heat insulating material.

The gas distribution arrangement may include a perforated gutter that may include a perforated metal section having an upper upright flange connected to an inwardly offset lower flange by way of an integral inclined web through which the perforations pass in which instance the perforations of the gutter are in registration with the upper open ends of the cavities such as the flutes of a twin walled fluted extruded sheet.

In a first variation of the invention the refrigerant support tray is removable very much in the manner of a drawer in order to facilitate installation, removal or replacement of refrigerant in the refrigerant receiving recess in which instance the inclined surfaces may be partially carried by the removable refrigerant support tray and partially by a ledge that extends inwards from the wall of the delivery container and that serves to support the tray.

In a second variation of the invention the refrigerant support tray may form part of a support tray assembly that occupies the entire space between the side walls and rear wall in which instance the downwardly inclined surfaces can communicate directly with openings communicating with the multiple cavities and the openings could simply be the open ends of flutes of a fluted twin wall sheet.

In accordance with a second aspect of the invention there is provided a delivery container for temperature sensitive goods, the delivery container having sidewalls, a rear wall, top and bottom walls, all of a heat insulated construction, an upright access opening opposite the rear wall, a door assembly for selectively closing the access opening, and a cooling gas distribution arrangement including a central refrigerant receiving recess in the top region of the interior thereof, the delivery container being characterised in that the door assembly includes an uppermost panel that opens separately from the balance of the door to provide access to the refrigerant receiving recess for installing or removing refrigerant whilst the rest of the door assembly remains closed.

Further features of the second aspect of the invention provide for the central refrigerant receiving recess to be provided in a refrigerant support tray that is removable by way of an opening formed by opening the uppermost panel of the door assembly; for the door assembly to comprise multiple panels the uppermost panel of which may remain closed while the rest of the door assembly is open; and for the rest of the door assembly to be configured as a plurality of panels connected by hinged sections so that the panels can be stacked on top of the delivery container when the door is open with one panel adjacent to the uppermost panel extending over the outside of the uppermost panel.

As a general rule, delivery containers according to the invention are made in a configuration such that the interior thereof may be devoid of any shelves or the like and is dimensioned to receive a stack of crates or the like that mutually support each other in a stacked configuration and that may contain products being transported or, in the alternative, any products may be supported on removable racks or the like. Of course, one or more shelves that are optionally removable may be provided.

In order that the above and other features of the invention may be more fully understood, one embodiment thereof will now be described with reference to the accompanying drawings.

### BRIEF DESCRIPTION OF THE DRAWINGS

In the drawings:-
- Figure 1: is a perspective view of one embodiment of the invention with the entire door assembly removed;
- Figure 2: is a front view thereof;
- Figure 3: is a plan view thereof with the top removed;
- Figure 4: is a perspective sectional view of part of the refrigerant support tray and supporting ledge and gutter assembly of the delivery container;
- Figure 5: is a detailed side view of a part of a metal section providing the perforations of the gutter;
- Figure 6: is an enlarged view of an end of the section;

- Figure 7: is a perspective view of a part of the metal section including one corner thereof;
- Figure 8: is a perspective view of the delivery container with the door assembly in a fully closed position;
- Figure 9: is the same but with the uppermost panel in an open condition;
- Figure 10: is the same as Figure 8 but showing only the lowermost door panel open;
- Figure 11: is the same as Figure 8 but showing the rest of the door assembly in a fully open position;
- Figure 12: is a side view of the delivery container showing the manner in which the relevant door panels stack on top of the container in the open condition;
- Figure 13: illustrates the support ledge and gutter assembly supporting a eutectic plate as a replacement for the refrigerant support tray illustrated in Figure 4;
- Figure 14: illustrates a second embodiment of the refrigerant support tray;
- Figure 15: illustrates in a three-dimensional sectional view the second embodiment of refrigerant support tray in situ in its associated delivery container;

- Figure 16: is a cross-sectional plan view of the second embodiment of the invention illustrating in particular the arrangement of the twin walled sheets;
- Figure 17: is a three-dimensional view from the front of an empty second embodiment of delivery container according to the invention (with the entire door assembly and channel supports removed); and,
- Figure 18: illustrates a variation of the arrangement illustrated in Figures 10 to 12 of the drawings that is aimed at preserving cold gases present in the container.

### DETAILED DESCRIPTION WITH REFERENCE TO THE DRAWINGS

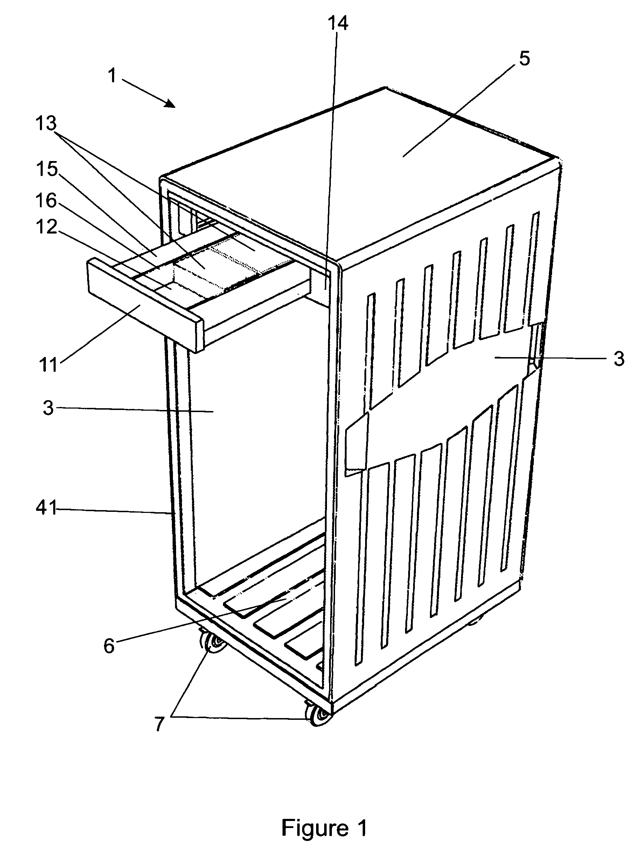

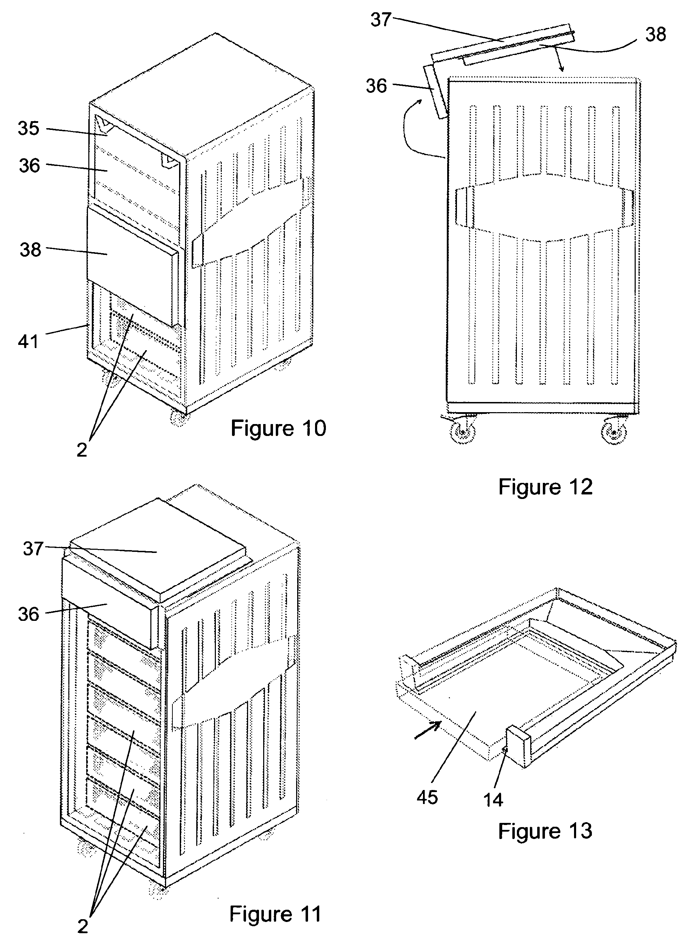

In the embodiment of the invention illustrated in Figures 1 to 13 of the drawings, a delivery container (1) for temperature sensitive goods is dimensioned to accommodate a stack of generally shallow crates (2) containing chilled or frozen goods for transport from a central distribution point to remote distribution outlets. Such a stack of crates is shown in Figures 10 and 11.

The delivery container has heat insulated sidewalls (3), a rear wall (4), a top wall (5) and a bottom wall (6) with a totally open front providing an upright access opening. The entire container is rendered mobile by mounting it on caster wheels (7) to facilitate its movement from one place to another over a suitable floor or other support surface. As an alternative to caster wheels, a sled arrangement may be used.

A cooling gas distribution arrangement is provided in the uppermost region of the container, the gas distribution arrangement including a removable refrigerant support tray (11) having a refrigerant receiving recess (12) that is located centrally with respect to the sidewalls and forwardly of the rear wall. The refrigerant receiving recess is dimensioned to receive blocks (13) of dry ice, or in the alternative, frozen eutectic plates. It may be that different trays will most advantageously be provided so that one of a different configuration may be used for blocks of dry ice or, in the alternative, frozen eutectic plates. As a further alternative eutectic plates may be installed in the place of the tray itself.

The refrigerant support tray is, in this embodiment of the invention, removable very much in the manner of a drawer in order to facilitate installation, removal or replacement of refrigerant in the refrigerant receiving recess. The tray is supported by a ledge (14) extending inwards from the wall of the delivery container. The ledge and tray each have aligned downwardly inclined surfaces (15) extending from a surrounding edge (16) of the recess towards a peripheral gutter (17) extending above the upper end region of the inner region of the sidewalls and rear wall.

The gutter has multiple equally spaced perforations (18) for distributing cooling gases settling in the gutter, in use, substantially evenly to the upper ends of the sidewalls and rear wall. The gutter conveniently includes a metal section (21) having an upper upright flange (22) connected to an inwardly offset lower flange (23) by way of an integral inclined web (24) through which the perforations pass.

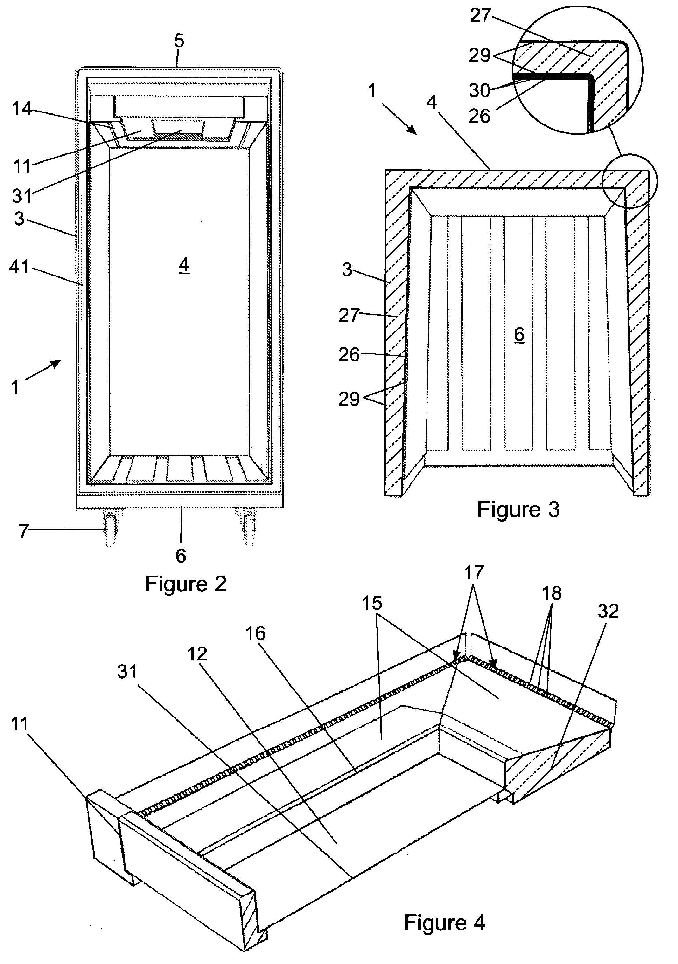

The sidewalls and rear wall each have multiple upright cavities in the form of flutes between twin walled sheets (26) of an extruded polypropylene such as that sold under the trade name CORFLUTE® by the company COREX PLASTICS (AUSTRALIA) PTY LTD or, in South Africa, under the trade name CORUPLAS® by the company AMPAGLAS (PTY) LTD. The sheets of twin walled extrusion are, in this embodiment of the invention, affixed to the inner surface of the outer wall of the container that has a core (27) of heat insulating foam that is enclosed in a suitable hollow external moulded plastic shell (29) that is typically rotation moulded and subsequently filled with the foam (see Figure 3). The perforations (18) of the gutter are preferably aligned with the open upper ends of the individual flute cavities (30) of the twin walled sheets. Of course, it is equally possible that an extruded section may have only one wall from which multiple upright flanges project and that those flanges may be directed either towards the inner wall of the container or towards the product stored therein so long as multiple cavities are provided.

With reference to Figure 4, the bottom (31) of the refrigerant receiving recess is of a thermally conductive material such as aluminium sheet with the balance (32) of the support tray being of heat insulating material such as suitable integral skin foamed polyurethane or equivalent heat insulating foamed plastics material. The inwardly projecting ledge (14) associated with the upper region of the sidewalls and rear wall of the delivery container is similarly made of a suitable foamed heat insulating material.

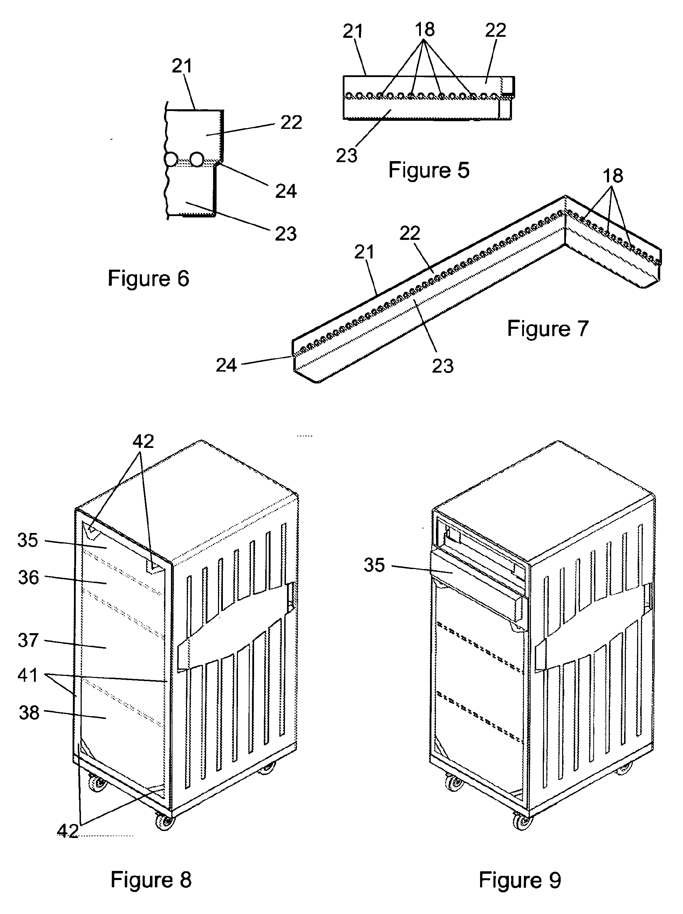

A door assembly is provided for selectively closing the access opening, and, as provided by the second aspect of this invention, the door assembly includes an uppermost panel (35) that opens separately from the balance of the door to provide access to the removable refrigerant support tray for installing or removing refrigerant whilst the rest of the door assembly remains closed. Figure 9 illustrates this uppermost panel in an open condition.

The balance of the door comprises further three panels (36, 37, 38) connected to each other by hinged sections so that the lowermost two panels (37, 38) can be stacked on top of the delivery container when the door is open with panel (36) next to the uppermost panel extending over the outside of the uppermost panel, as shown clearly in Figures 11 and 12.

The construction of the door panels is substantially conventional and each panel is made of heat insulating material and fits snugly into its closed position in the access aperture and has hook and loop style fasteners (41) (such as those sold under the trade name "VELCRO^{®}" for securing the panels in the closed position by inter engagement of fasteners that are applied to the front edges of the sidewalls, top wall and bottom wall and those that project laterally from the panels of the door. The arrangement is such that, in the closed position of the panels of the door, the interior of the delivery container is effectively thermally insulated.

Both the uppermost and the lowermost panels (35, 38) have loops (42) of strap material that can be pulled to disengage the relevant panel from the delivery container as and when it is required to open that particular panel.

In use, cooling of the airspace around temperature sensitive goods loaded into the delivery container is achieved in the first place by convection of cold air or other gases within the container. This occurs in consequence of the cold under-surface of the thermally conductive bottom of the refrigerant receiving recess or, in the alternative, the bottom of a eutectic plate installed in place of the support tray itself. This convective action is primarily responsible for the cooling of the internal gases and the goods loaded into the delivery container and takes place consequent on heat being absorbed by the change of phase of dry ice from a solid to a gas or from a solid to a liquid in the case of a eutectic plate respectively.

The flow of cold gas or air, or a mixture of both, off the top of the refrigerant in the support tray or the eutectic plate and thence down the fluting, lowers the temperature of the twin walled sheeting and is effective in that it is considered to flush away radiated heat that makes its way through the insulated containers walls. This may be considered to be a second line of defense against the ingress of radiated heat through the walls of the container and may be viewed as active insulation whereas the foam of the walls of the container serve as passive insulation. Any increase in the volume of gases within the delivery container consequent on the sublimation of dry ice within the support tray is accommodated using an outlet in the bottom of the delivery container as described in earlier South African patent number 98/2759 entitled "A COLD STORAGE CONTAINER".

Numerous variations may be made to the embodiment of the invention described above without departing from the scope hereof. For example, the door panels may be arranged to be capable of being opened sequentially in a downwards direction from the door panel immediately beneath the uppermost panel that provides access to the refrigerant support tray or eutectic plates, as the case may be. Providing a series of downwardly opening door panels has the distinct advantage that cold air trapped in the lower regions of the container remains trapped while the uppermost goods are removed from the container.

Also, as illustrated in Figure 13, the entire refrigerant tray may be replaced by one or more eutectic plates (45) that may be therefore supported directly on the ledge (14) so the eutectic plates will simply replace the entire refrigerant tray in this embodiment of the invention.

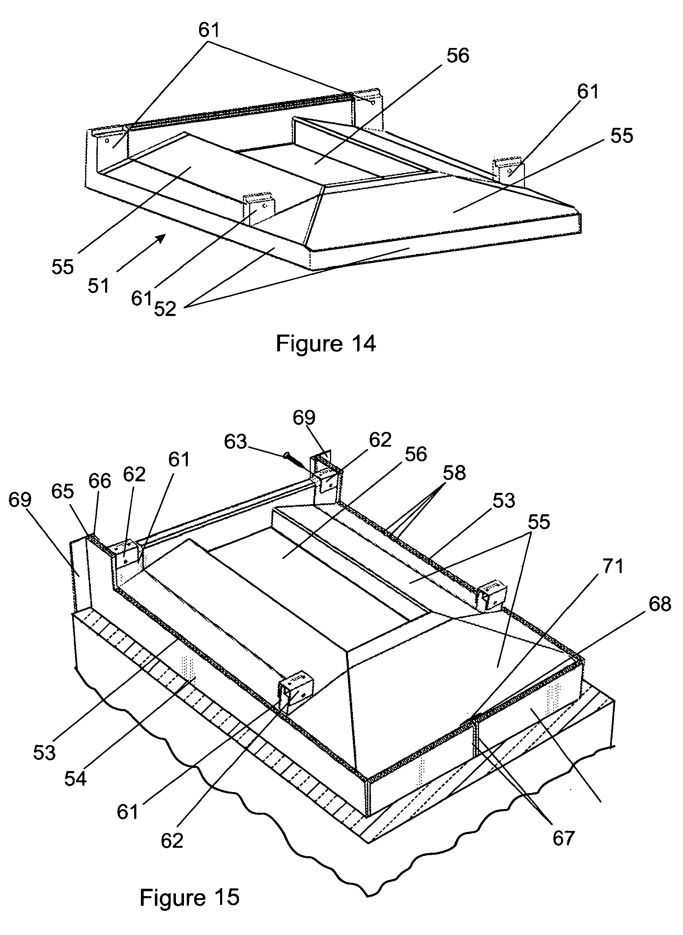

However, in the second variation of the invention defined above, and with reference to Figures 14 to 17 of the drawings, the refrigerant support tray may be combined with the ledge described above to form a refrigerant support tray assembly (51) that is removable from the delivery container and that is attached to it differently. In this instance the support tray assembly has edges (52) that cooperate with the top edge (53) of each of two twin walled sheets (54) that line the sidewalls and rear wall of the delivery container with the outer edge of the downwardly inclined surfaces (55) extending from the periphery of the refrigerant recess (56) to the twin walled sheet. This arrangement is such that the edges of the support tray assembly urge the upper edges of the twin walled sheets towards the sidewall and rear wall with which they are associated.

With this arrangement the necessity for the perforated gutter is totally obviated as the inclined surfaces (55) of the support tray assembly communicate directly with the open upper ends of the flutes (58) of the twin walled sheets and this arrangement automatically distributes cooling gases sufficiently evenly to ensure that the interior of the delivery container remains appropriately cold. This will be quite apparent from Figure 15 of the drawings.

The support tray assembly is removable and is secured in its operative position by means of four upstanding suspension formations (61) that engage in cooperating downwardly directed channel supports (62) that are attached to the inside of the top of the delivery container. The support tray assembly is attached to the channel supports by means of transverse fasteners (63).

In order to allow the support tray assembly to be appropriately close to the top of the delivery container, the transverse fasteners are arranged so that the front two can be removed firstly; the front of the support tray assembly can be dropped a short distance followed by removal of the rear transverse fasteners. Installation of the support tray assembly clearly takes place using the reverse procedure.

This arrangement further enables the twin walled sheets to be configured so that they are removable for cleaning and optionally replacement purposes. In this instance each of the twin walled sheets comprises a side panel covering substantially the entire sidewall in plan view and a rear panel that covers one half of the rear wall of the delivery container.

Each of these twin walled sheets has a front edge (65) that is trapped in a rearwardly directed channel formation (66) and a rear edge (67) that is trapped in a laterally directed channel formation (68) in the centre of the rear of the delivery container. The former channel formation (66) is formed by an inwardly directed flange of an angle section (69) that is secured to the front edge of the delivery container and that has an outwardly directed surface that forms the attachment surface for receiving the one strip of the hook and loop fastener that is described in more detail above in relation to the first embodiment of the invention. The laterally directed channel formation (68) is, on the other hand, defined by the crossbar of a central upright Tee section (71) that projects forwards from the rear wall of the delivery container.

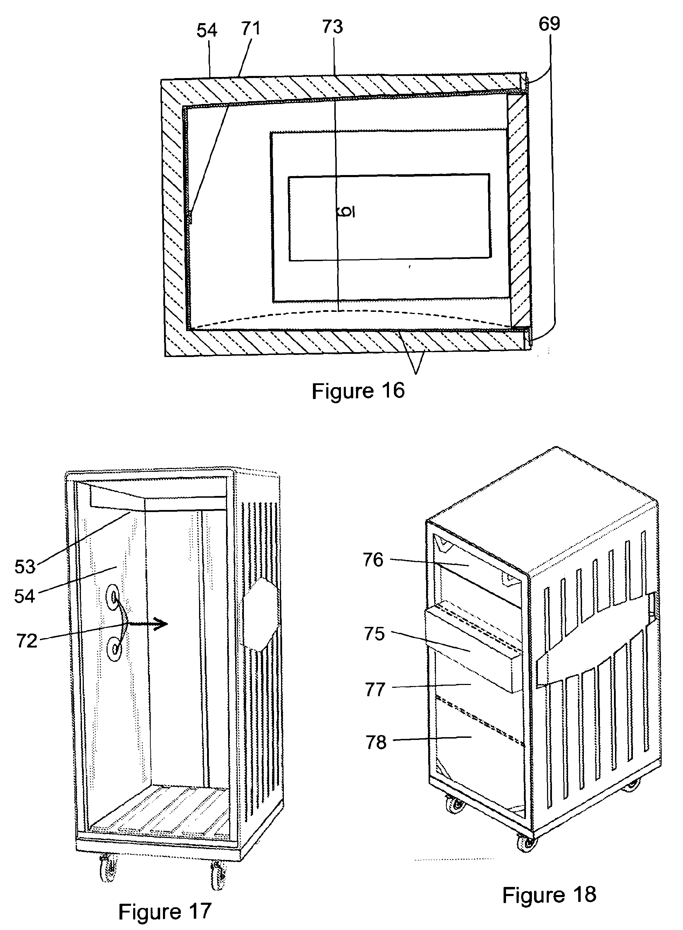

It will be understood that the edges of the support tray assembly hold the twin walled sheets in their positions described above. However, if it is required to remove them for cleaning or other purposes, the refrigerant support tray assembly is firstly removed, and thereafter, as shown in Figure 17, a suction cup assembly (72) can be engaged with the inside of a side panel. The side panel sheet can be pulled away from the sidewall of the delivery container so that it flexes outwards sufficiently for the front edge of the sheet to disengage from the rearwardly directed channel formation. This is indicated by the abode dotted line (73) in Figure 16. The relevant sheet can then be moved outwards through the access opening to enable the rear edge of the sheet to be disengaged from the laterally directed channel formation (68). The delivery container can then be thoroughly cleaned as can the twin walled sheets, or they can be replaced as may be required and according to the products to be stored therein.

Figure 18 illustrates a variation of the arrangement illustrated in Figures 10 to 12 of the drawings in that, in the interests of preserving cold atmosphere present in the container, for example whilst an upper crate is removed, the second door panel down (75), that is the one directly beneath the uppermost panel (76) that opens separately to provide access to the refrigerant support tray assembly, can open downwards instead of upwards. This enables a single panel to be opened and, indeed, other lower door panels (77, 78) to be opened progressively downwards in each instance preventing the relatively heavy cold gases and cold atmosphere from flowing out of the delivery container.

It will be understood that numerous other variations may be made to the embodiment of the invention described above without departing from the scope of the claims.

## Claims

1. A delivery container (1) for temperature sensitive goods, the delivery container having sidewalls (3), a rear wall (4), top (5) and bottom (6) walls all of a heat insulated construction, an upright access opening opposite the rear wall, a door assembly for selectively closing the access opening, and a cooling gas distribution arrangement including a refrigerant receiving recess (12) in the top region of the interior thereof and multiple generally upright cavities (26) associated with the sidewalls and rear wall, the delivery container being **characterised in that** the refrigerant receiving recess (12) is provided in a refrigerant support tray (11) having surfaces (15) inclined downwardly towards an upper region of the sidewalls and rear wall of the delivery container for distributing cooling gases generated by refrigerant located in the refrigerant receiving recess to openings (18) communicating with the multiple upright cavities, in use.

2. A delivery container for temperature sensitive goods as claimed in claim 1 in which the refrigerant support tray (11) is removable from the delivery container.

3. A delivery container for temperature sensitive goods as claimed in either one of claims 1 or 2 in which the multiple upright cavities (26) are in the form of upright flutes between twin walls of an extruded plastics sheet.

4. A delivery container for temperature sensitive goods as claimed in claim 3 in which the extruded plastics sheet is removable from the delivery container (1).

5. A delivery container for temperature sensitive goods as claimed in any one of the preceding claims in which at least a part of the bottom of the refrigerant receiving recess (12) is of a thermally conductive material with the balance of the support tray being of heat insulating material.

6. A delivery container for refrigerated goods as claimed in any one of the preceding claims in which the gas distribution arrangement includes a perforated gutter having a perforated (18) metal section with an upper upright flange connected to an inwardly offset lower flange by way of an integral inclined web through which perforations pass.

7. A delivery container for temperature sensitive goods as claimed in any one of the preceding claims in which the refrigerant support tray (11) is removable in the manner of a drawer and the inclined surfaces are partially carried by a removable refrigerant support tray and partially by a ledge that extends inwards from the side wall and rear wall of the delivery container and that serves to support the tray.

8. A delivery container for temperature sensitive goods as claimed in any one of claims 1 to 6 in which the refrigerant support tray (11) forms part of a support tray assembly that occupies the entire space between the side walls and rear wall and the downwardly inclined surfaces communicate directly with openings communicating with the multiple cavities

9. A delivery container for temperature sensitive goods as claimed in claim 8 in which the openings are the open ends of flutes of a fluted twin wall sheet.

## Patentansprüche

1. Ausgabebehälter (1) für temperaturempfindliche Waren, wobei der Ausgabebehälter Seitenwände (3), eine Rückwand (4), eine obere (5) und untere (6) Wand, sämtlich von einem wärmeisolierenden Aufbau, eine aufrechte Zugriffsöffnung gegenüber der Rückwand, eine Türanordnung zum selektiven Schließen der Zugriffsöffnung und eine Kühlgas-Verteilungsanordnung aufweist, die eine Kühlmittelaufnahme-Aussparung (12) in dem oberen Bereich der Innenseite davon und mehrfache im Allgemeinen aufrechte Hohlräume (26) beinhaltet, die den Seitenwänden und der Rückwand zugeordnet sind, wobei der Ausgabebehälter **dadurch gekennzeichnet ist, dass** die Kühlmittel-Aufnahmeaussparung (12) in einem Kühlmittel-Haltefach (11) angeordnet ist, das Flächen (15) aufweist, die abwärts zu einem oberen Bereich der Seitenwände und der Rückwand des Ausgabebehälters geneigt sind, um bei Gebrauch Kühlgase, die durch das Kühlmittel erzeugt werden, das in der Kühlmittel-Aufnahmeaussparung lokalisiert ist, zu Öffnungen (18) zu verteilen, die mit den mehrfachen aufrechten Hohlräumen in Verbindung stehen.

2. Ausgabebehälter für temperaturempfindliche Waren nach Anspruch 1, bei welchem das Kühlmittel-Haltefach (11) aus dem Ausgabebehälter entfernbar ist.

3. Ausgabebehälter für temperaturempfindliche Waren nach einem der Ansprüche 1 oder 2, bei welchem die mehrfachen aufrechten Hohlräume (26) in der Form aufrechter Auskehlungen zwischen Doppelwänden einer extrudierten Kunststoffplatte vorliegen.

4. Ausgabebehälter für temperaturempfindliche Waren nach Anspruch 3, bei welchem die extrudierte Kunststoffplatte aus dem Ausgabebehälter (1) entfernbar ist.

5. Ausgabebehälter für temperaturempfindliche Waren nach einem der vorhergehenden Ansprüche, bei welchem zumindest ein Teil des Bodens der Kühlmittel-Aufnahmeaussparung (12) aus einem thermisch leitfähigen Material ist, wobei die Fassung des Haltefachs aus einem wärmeisolierenden Material ist.

6. Ausgabebehälter für gekühlte Waren nach einem der vorhergehenden Ansprüche, bei welchem die Gasverteilungsanordnung eine perforierte Rinne beinhaltet, die einen perforierten (18) Metallabschnitt mit einem oberen aufrechten Flansch aufweist, der mit einem nach innen versetzten unteren Flansch vermöge eines integralen geneigten Stegs verbunden ist, durch welchen Perforationen laufen.

7. Ausgabebehälter für temperaturempfindliche Waren nach einem der vorhergehenden Ansprüche, bei welchem das Kühlmittel-Haltefach (11) in der Weise einer Schublade entfernbar ist und die geneigten Flächen teilweise durch ein entfernbares Kühlmittel-Haltefach und teilweise durch einen Absatz getragen werden, der sich von der Seitenwand und der Rückwand des Ausgabebehälters nach innen erstreckt und der dazu dient, das Fach zu halten.

8. Ausgabebehälter für temperaturempfindliche Waren nach einem der Ansprüche 1 bis 6, bei welchem das Kühlmittel-Haltefach (11) einen Teil einer Haltefachanordnung bildet, welche den gesamten Raum zwischen den Seitenwänden und der Rückwand einnimmt, und die abwärts geneigten Flächen direkt mit den Öffnungen in Verbindung stehen, die mit den mehrfachen Hohlräumen in Verbindung stehen.

9. Ausgabebehälter für temperaturempfindliche Waren nach Anspruch 8, bei welchem die Öffnungen die offenen Enden von Auskehlungen einer ausgekehlten Doppelwandplatte sind.

## Revendications

1. Conteneur de distribution (1) pour marchandises sensibles à la température, le conteneur de distribution possédant des parois latérales (3), une paroi arrière (4), des parois supérieure (5) et inférieure (6) toutes construites de manière à offrir une isolation vis-à-vis de la chaleur, une ouverture d'accès verticale opposée à la paroi arrière, un ensemble formant porte pour fermer sélectivement l'ouverture d'accès, et un dispositif de répartition de gaz de refroidissement comportant un réceptacle pour agent frigorifique (1a) en haut de sa section intérieure et de multiples cavités (26) globalement verticales associées aux parois latérales et arrière, le conteneur de distribution étant **caractérisé en ce que** le réceptacle pour agent frigorifique (12) est prévu dans un plateau de support pour agent frigorifique (11) présentant des surfaces (15) inclinées vers le bas en direction du haut des parois latérales et arrière du conteneur de distribution pour permettre la répartition des gaz de refroidissement produits par l'agent frigorifique présent dans le réceptacle pour agent frigorifique vers des ouvertures (18) en communication avec les multiples cavités verticales, à l'usage.

2. Conteneur de distribution pour marchandises sensibles à la température selon la revendication 1, dans lequel le plateau de support pour agent frigorifique (11) peut être extrait du conteneur de distribution.

3. Conteneur de distribution pour marchandises sensibles à la température selon l'une quelconque des revendications 1 et 2, dans lequel les multiples cavités verticales (26) se trouvent sous la forme de cannelures verticales entre les parois doubles d'une feuille de plastique extrudée.

4. Conteneur de distribution pour marchandises sensibles à la température selon la revendication 3 dans lequel la feuille de plastique extrudée peut être extraite du conteneur de distribution (1).

5. Conteneur de distribution pour marchandises sensibles à la température selon l'une quelconque des revendications précédentes, dans lequel au moins une partie du fond du réceptacle pour agent frigorifique (12) se compose d'une matière thermoconductrice, le restant du plateau de support se composant d'une matière calorifuge.

6. Conteneur de distribution pour marchandises réfrigérées selon l'une quelconque des revendications précédentes, dans lequel le dispositif de répartition de gaz comporte une goulotte perforée présentant une section de métal à perforations (18) comportant un pan vertical supérieur se prolongeant en un pan inférieur en décalage rentrant par le biais d'une bande inclinée constituée d'un seul tenant avec ces derniers et traversée de perforations.

7. Conteneur de distribution pour marchandises sensibles à la température selon l'une quelconque des revendications précédentes, dans lequel le plateau de support pour agent frigorifique (11) peut être extrait à la manière d'un tiroir et les surfaces inclinées sont portées partiellement par un plateau de support extractible pour agent frigorifique et partiellement par un rebord orienté vers l'intérieur à partir de la paroi latérale et de la paroi arrière du conteneur de distribution et servant de support au plateau.

8. Conteneur de distribution pour marchandises sensibles à la température selon l'une quelconque des revendications 1 à 6, dans lequel le plateau de support pour agent frigorifique (11) appartient à un ensemble à plateau de support occupant la totalité de l'espace présent entre les parois latérales et la paroi arrière, et les surfaces inclinées vers le bas communiquent directement avec les ouvertures en communication avec les cavités multiples.

9. Conteneur de distribution pour marchandises sensibles à la température selon la revendication 8, dans lequel les ouvertures sont les extrémités ouvertes des cannelures d'une feuille cannelée à double paroi.
